# EUROPÄISCHE PATENTSCHRIFT

(11) **EP 1 029 756 B1**
(45) Veröffentlichungstag und Bekanntmachung des Hinweises auf die Patenterteilung: **08.11.2006**
(21) Anmeldenummer: 00100867.1
(22) Anmeldetag: 18.01.2000
(51) Int. Cl.: B60R 25/04, B60R 25/00

(54) **Elektronisches Zündstartschlosssystem für ein Kraftfahrzeug**
Electronic ignition lock system for a motor vehicle
Système de serrure d'allumage électronique pour un véhicule à moteur

(30) Priorität: 20.02.1999 DE 19907374
(43) Veröffentlichungstag der Anmeldung: 23.08.2000
(73) Patentinhaber: Volkswagen Aktiengesellschaft, 38436 Wolfsburg (DE)
(72) Erfinder: Nemetschek, Dominique, 38110 Braunschweig (DE); Titze, Andreas, Dr., 38118 Braunschweig (DE)

(56) Entgegenhaltungen:
- EP-A- 0 742 127
- DE-A- 3 726 774
- DE-A- 4 434 655
- US-A- 5 635 916

## Beschreibung

Die Erfindung betrifft ein elektronisches Zündstartschloßsystem für ein Kraftfahrzeug, umfassend mindestens einen Identifikationsgeber, eine Identifikationserkennungseinrichtung und einen Drehschalter.

Bei Kraftfahrzeugen ist die Herstellung der Zugangsberechtigung (Schließ/Öffnungsvorgang) und die Inbetriebnahme (Motorstartvorgang) auf mechanischem Wege üblich. Das Öffnen bzw. Schließen der Fahrertür und auch die Bedienung des Zündschlosses (Entriegelung des Lenkradschlosses, Zündung/Anlassen) erfolgt dabei über den gleichen mechanischen Schlüssel. Daneben sind auch kombinierte mechanisch elektronische Systeme bekannt, bei denen der Schließvorgang auf elektronischem Wege mittels einer IR- oder HF-Fernbedienung erfolgt, wobei jedoch ein mechanischer Schlüssel als Notzugangsmöglichkeit bei Ausfall der Fernbedienung mitgeführt werden muß. Der eigentliche Startvorgang erfolgt dabei herkömmlich mittels Drehung des Schlüssels im Zündschloß. Nachteilig bei den angeführten Systemen ist, daß mechanische Schlüssel unbedingt erforderlich sind, was einerseits eine zusätzliche Belastung sowie eine gewisse Sicherheitsproblematik aufgrund der geringen Anzahl unterschiedlicher Schlüssel mit sich bringt und andererseits ein aufwendig gestaltetes Zündschloß zur Erfüllung der gesetzlichen Anforderung bzw. Auflagen hinsichtlich Diebstahlschutz (Lenkradschloß) und Fahrsicherheit (kein Abziehen während der Fahrt) notwendig macht.

Aus der DE 44 03 655 ist ein kombiniertes System für Schließvorgang und Motorstartvorgang bekannt, das die Zugangsberechtigung überprüft und die Inbetriebnahme realisiert. Hierbei werden durch sowohl eine externe als auch eine interne Redundanz des Schließsystems keinerlei mechanische Schlüssel benötigt. Weiterhin ist der Motorstartvorgang derart an das Schließsystem gekoppelt, daß auf ein aufwendiges Zündschloß verzichtet werden kann. Das System umfaßt eine Sendeeinheit ("Schlüssel") als integrierte Baueinheit aus einer Fembedienungseinheit und einer Transpondereinheit. Sowohl die batteriebetriebene Fernbedienung als auch der Transponder können die Schließfunktion zum Öffnen/Schließen der Fahrzeugtüren durch Übermittlung eines codierten Signals übernehmen. Weiter umfaßt das System eine Empfängereinheit mit mindestens einem im Fahrzeuginneren oder am Fahrzeug angebrachten Empfänger zur Detektion und mindestens einer Auswerteelektronikeinheit zur Überprüfung des von der Sendeeinheit übermittelten codierten Signals. Weiter existiert eine erste Steuereinheit, die die Entriegelung/Verriegelung der Fahrzeugtüren überwacht. Diese Steuereinheit ist mit dem Empfänger der Empfangseinheit verbunden und wird durch das codierte Signal aktiviert/deaktiviert. Eine weitere Steuereinheit dient als Diebstahlschutz, die nach der Verifizierung des codierten Schlüsselsignals gleichzeitig mit dem Öffnungs-/Schließvorgang der Fahrzeugtür über die Verbindung Empfänger-Wegfahrsperre deaktiviert wird, so daß ein separates Lenkradschloß entbehrlich ist. Zusätzlich kann ein Anlaßschalter vorgesehen sein, durch den der Motorstart initiiert werden kann, sobald die Wegfahrsperre deaktiviert wurde. Der Motorstartvorgang wird dabei von allen Sicherungsmaßnahmen entkoppelt, so daß der Anlaßvorgang als eine noch verbleibende elektrische Funktion des Zündschlosses durch einen einfachen, beispielsweise als mechanischen Drehschalter ausgebildeten, Anlaßschalter realisiert werden kann. Dieses eine Vielzahl von Vorteilen aufweisende System hat jedoch hinsichtlich der Betriebssicherheit einige Nachteile. So muß sichergestellt sein, daß das Kraftfahrzeug nicht unabsichtlich gestartet wird, beispielsweise falls der Fahrzeugführer etwas aus dem Kraftfahrzeug holen möchte und dabei versehentlich an den Anlaßschalter kommt, oder aber daß nicht im Kraftfahrzeug sitzende Kinder unabsichtlich das Fahrzeug starten können.

Ein weiterer Nachteil besteht darin, daß die mechanischen Drehschalter mit ihren verschiedenen Raststellungen, was beispielsweise in der WO 96 / 16844 dargestellt ist, zu undefinierten Zuständen beim Verlassen des Kraftfahrzeuges führen können. Steht beispielsweise der Drehschalter auf einer Position "Radio an", so muß das Radio bei Verlassen des Kraftfahrzeuges und Betätigung der Zentralverriegelung ausgeschaltet werden, um die Kraftfahrzeugbatterie nicht zu entladen. Beim späteren Entriegeln steht dann der Drehschalter immer noch auf "Radio an". Das System hätte nun prinzipiell zwei Möglichkeiten, nämlich die Funktion die noch eingestellt ist auszuführen oder zu ignorieren. Beim Ausführen stellt sich das Problem, daß es für den Fahrer irritierend ist, daß beim Einsteigen etwas im Kraftfahrzeug geschieht. Steht beispielsweise der Drehschalter auf Start", so wird das Kraftfahrzeug mit Entriegelung gestartet. Daher muß eine Ausführung der noch eingestellten Funktion unterbleiben. Wenn die eingestellte Funktion jedoch ignoriert wird, stellt sich das Problem, wie dann die über den Schalter eingestellte Funktion wieder aktiviert werden kann.

Aus der DE 195 04 991 C1 ist ein Startschalter für ein Kraftfahrzeug bekannt, welches zur Prüfung der Fahrberechtigung des jeweiligen Fahrers mit einem Transpondersystem ausgerüstet ist, wobei der Fahrer zur Identifizierung eine Identifizierungskarte besitzt und in dem Fahrzeug eine entsprechende Elektronik vorgesehen ist, die die Signale der Identifizierungskarte auswertet und gegebenenfalls Signale zur Ansteuerung der Zündung und/oder weitere für das Fahren relevante Systemgruppen erzeugt. Der Startschalter ist als Drehgriff ausgebildet, in dem sich ein Kartenschacht für die Identifizierungskarte befindet. Dem Drehgriff sind vier Stellungen zugeordnet. In einer ersten Stellung kann die Identifizierungskarte in den Kartenschacht eingeführt werden, wo diese dann verriegelt wird. Nach dem Einschieben der Identifizierungskarte in den Kartenschacht des Drehgriffs wird ein elektrischer Schalter betätigt, der eine Startsperre entriegelt und die Zündelektronik aktiviert. In einer zweiten Stellung des Drehschalters kann die Identifizierungskarte wieder entnommen werden. Zum Starten des Motors wird der Drehgriff in eine dritte Stellung und von dort in vierte Stellung bewegt. Zum Starten wird dann ein separater Schalter zum Starten betätigt, worauf dann der Drehgriff mittels einer Feder automatisch in die dritte Stellung zurückgeführt wird, wo er während der Fahrt verbleibt.

Der Vorteil dieser Vorrichtung ist, daß beim Verlassen des Kraftfahrzeuges der Drehschalter immer in einer definierten Position sich befindet, nämlich in der Position zur Entnahme der Identifizierungskarte. Nachteilig an der bekannten Vorrichtung ist jedoch deren Nichtanwendbarkeit bei als Transponder ausgebildeten Identifizierungsgebern.

Desweiteren ist in der europäischen Patentschrift EP 720 545 B1 ein elektronisches Zündstartschloßsystem an einem Kraftfahrzeug offenbart. Das beschriebene Zündstartschloßsystem besteht aus einem elektronischen Zündschlüssel und einem elektronischen Zündstartschloß zur Betätigung eines zugehörigen Betriebsaggregates über einen Drehschalter. Das Betriebsaggregat steht über Leitungen mit dem Zündstartschoß in Verbindung, so daß das Betriebsaggregat durch entsprechende Signale vom Zündstartschloß in Betrieb genommen werden kann. Zur Energieversorgung des Senders für die Fernbedienung besitzt der Zündschlüssel einen Energiespeicher, beispielsweise eine Batterie.

Das Zündstartschloß besitzt eine Aufnahme, in die der Zündschlüssel zur Inbetriebnahme des Betriebsaggregates einführbar ist. Im Zündstartschloß tauscht der Zündschlüssel mit dem Zündstartschloß wenigstens ein codiertes Betriebssignal aus. Bei einer positiven Auswertung, d. h. es handelt sich um den richtigen Schlüssel, wird die Inbetriebnahme des Betriebsaggregates durch das Zündstartschloß ermöglicht. Dem Benutzer ist es nun möglich, den Zündschlüssel mitsamt dem Drehschalter aus der Ausgangsstellung in eine rotatorische Bewegung versetzen, um in wenigstens eine weitere Stellung zur Betätigung weiterer Schaltvorgänge, zu gelangen. Einer dieser Schaltvorgänge dient letztendlich dazu, das Betriebsaggregat in Betrieb zu nehmen. Bei gedrehter Steckdose ist eine Entnahme des Zündschlüssels aus der Steckdose des Zündstartschlosses zur Verhinderung einer ungewollten Außerbetriebsetzung des Kraftfahrzeuges nicht möglich.

In der DE 44 34 655 A1 ist ein elektronisches Zündstartschlosssystem für ein Kraftfahrzeug gemäß dem Oberbegriff des Anspruchs 1 beschrieben, welches einen elektronischen Zündschlüssel und ein elektronisches Zündstartschloss aufweist. Der elektronische Zündschlüssel ist im eingesteckten Zustand mit einer Drehhülse und einer Steckdose gekoppelt, wobei die Steckdose in einem Zündstartschalter drehbar ausgebildet ist. Die Steckdose steht mit der Drehhülse über eine drehelastische Kopplung in Verbindung, wobei die drehelastische Kopplung einen Zwischenring und eine Feder aufweist. Bei dem bekannten Zündstartschlosssystem wird beim Abschalten über mehrere Stufen eine Ausgangsstellung erreicht. Entsprechende Funktionen werden somit stufenweise und nacheinander abgeschaltet.

Allgemein bestehen die Vorrichtungen zum schlüssellosen Starten eines Kraftfahrzeuges aus einem Identifizierungsgeber, einer Identifikationserkennungseinrichtung und einem den Startvorgang initiierenden Drehschalter, wobei der Identifikationsgeber sowohl berührungslos als Transponder als auch als einsteckbare Chipkarte oder elektronischen Schlüssel ausgebildet sein kann.

Aus Gründen der Serienfertigung ist es erwünscht, daß sich unabhängig davon, welche der beiden Möglichkeiten konkret verwendet wird, die Vorrichtung im wesentlichen gleich verhält.

Der Erfindung liegt daher das technische Problem zugrunde, ein elektronisches Zündstartschloßsystem zu schaffen, das jeweils in gleichen, definierten Betriebszuständen unabhängig davon, ob der Identifikationsgeber als berührungloser Identifikationsgeber oder als elektronischer Schlüssel ausgebildet ist, benutzt wird. Die Lösung des technischen Problems ergibt sich durch die Merkmale des Patentanspruchs 1. Weitere vorteilhafte Ausgestaltungen der Erfindung ergeben sich aus den Unteransprüchen.

Durch die Ausbildung des Drehschalters als bidirektionaler Drehschalter mit einer automatischen Rückstelleinrichtung befindet sich der Drehschalter stets nach jeder Interaktion in einer definierten Stellung, nämlich der Ausgangs- oder Nullage. Dadurch wird verhindert, daß sich im Gegensatz zu den aus dem Stand der Technik bekannten Drehschaltern mit Raststellung der Drehschalter beim Abziehen des Schlüssels oder Verlassen des Transponders aus dem Kraftfahrzeug noch in einer Funktionsstellung befindet. Dabei ist der einen Drehrichtung eine sukzessive Zu- und der anderen Drehrichtung eine sukzessive Abschaltung von Funktionen zugeordnet. Mindestens einer Drehrichtung, vorzugsweise der der Abschaltung von Funktionen zugeordneten Drehrichtung, ist ein Anschlag mit einer Einrichtung zur Erfassung der Betätigungszeit zugeordnet, so daß bei längerer Betätigung beispielsweise alle Funktionen durch eine Drehung mit Halten am Anschlag abschaltbar sind.

In einer weiteren bevorzugten Ausführungsform ist mindestens einer Drehrichtung, vorzugsweise die der Zuschaltung zugeordnete Drehrichtung, mit einem Druckpunkt ausgebildet, so daß der Drehschalter bei Überschreitung eines Grenzdrehmoments M_{gr} über den Drehpunkt hinaus bewegbar ist, wodurch mittels einer einzigen Betätigung alle Funktionen einschließlich des Startvorgangs initiiert werden können.

Sehr einfach läßt sich die automatische Rückstelleinrichtung mittels eines Federsystems realisieren, so daß der Drehschalter gegen eine Federkraft bewegt werden muß und bei Aufhebung des Drehmomentes automatisch in die Nullage zurückgefedert wird.

Nach einer Weiterbildung der Erfindung weist der Drehschalter eine Aufnahme für den Identifikationsgeber auf, in der der Identifikationsgeber mit elektrischer Energie versorgt wird und die Datenkommunikation mit der Identifikationserkennungseinrichtung erfolgt. Dies hat den Vorteil, daß der Identifikationsgeber keine eigene Energieversorgung, beispielsweise eine Batterie, benötigt, andererseits muß er nur für eine kurze Kommunikationsstrecke zur Identifikationserkennungseinrichtung ausgelegt sein. Bei der Verwendung von Identifikationsgebern, die über eine größere Entfernung mit der Identifikationserkennungseinrichtung, zum Beispiel über Funk, kommunizieren , kann die Weiterbildung des erfindungsgemäßen Zündstartsystems als sogenannte Notfallösung verwendet werden, beispielsweise wenn der Energiespeicher des Identifikationsgebers leer ist.

Die Energieübertragung zum Identifikationsgeber erfolgt dabei vorteilhafterweise induktiv. Die Datenkommunikation zwischen dem Identifikationsgeber und der Identifikationserkennungseinrichtung erfolgt in bevorzugter Weise induktiv oder optisch.

Um ein ungewolltes Entfernen des Identifikationsgebers aus der Aufnahme des Drehschalters bzw. aus dem Zündanlaßschloß zu verhindern, weist die Aufnahme bzw. das Zündanlaßschloß eine Abzugssperre für den Identifikationsgeber auf.

Gemäß einer Weiterbildung der Abzugssperre ist diese zumindest bei eingeschalteter Zündung aktiv. Eine andere Ausbildung sieht vor, das die Abzugssperre zumindest bei einer Fahrgeschwindigkeit ungleich Null aktiv ist. Desweiteren kann vorgesehen sein, daß die Abzugssperre in Abhängigkeit der Getriebestellung (Gang, Parkposition und bei Automatikgetrieben) aktiv geschaltet ist. Auch das Signal für die Betätigung einer Handbremse (elektronische Feststellbremse) ist dafür verwendbar.

Zur Erhöhung der Sicherheit gegen einen versehentlichen Startvorgang wird das vom Drehschalter initiierte Startsignal mit einem eine Pedaltätigkeit repräsentierenden Signal verknüpft. Bei Kraftfahrzeugen mit Schaltgetriebe wird hierzu das Kupplungspedal und bei Kraftfahrzeugen mit Automatikgetriebe das Bremspedal ausgewählt, so daß die Einleitung eines Startvorgangs zwei bewußte Interaktionen erfordert, nämlich die Betätigung eines bestimmten Pedals und die Drehung des Drehschalters.

Nach einer vorteilhaften Weiterbildung der Erfindung sind über den Drehschalter neben dem Betriebsaggregat des Kraftfahrzeuges weitere Bordnetzkomponenten zu- und abschaltbar.

Der Vorteil des erfindungsgemäßen Zündstartschloßsystems, das inkonsistente Zustände des Drehschalters, insbesondere im keyless-entry-Fall, d.h. bei Fernabfrage des Identifikationsgebers, zwischen dem Betriebszustand des Fahrzeuges und der Drehschalterstellung vermieden werden.

Die Erfindung wird nachfolgend anhand eines bevorzugten Ausführungsbeispiels näher erläutert. Die Figuren zeigen:
- Fig. 1: eine schematische Darstellung eines erfindungsgemäßen Zündstartschloßsystems,
- Fig. 2: ein Blockschaltbild der Elektronik des Zündstartschloßsystems,
- Fig. 3: eine schematische Darstellung eines Drehschalters in Nullage,
- Fig. 4: eine Darstellung des Drehschalters am Druckpunkt in Drehrichtung zur Zuschaltung von Funktionen,
- Fig. 5: eine Darstellung des Drehschalters an einem Anschlag in Drehrichtung zur Zuschaltung von Funktionen und
- Fig. 6: eine Darstellung des Drehschalters an einem Anschlag in Drehrichtung zur Abschaltung von Funktionen.

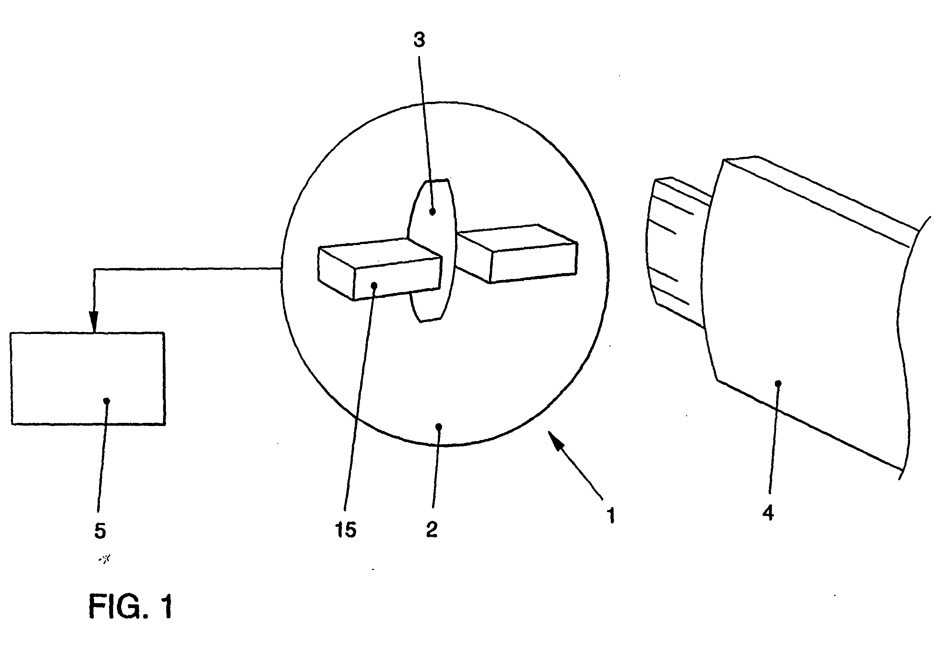

Das in Fig. 1 dargestellte Zündstartschloßsystem für ein Kraftfahrzeug besteht aus einem als Identifikationsgeber 4 ausgebildeten elektronischen Zündschlüssel und einem elektronischen Zündstartschloß 1 zur Betätigung mindestens eines zugehörigen Betriebsaggregates 5. Beim Betriebsaggregat 5 kann es sich zum Beispiel um die Motorelektronik des Kraftfahrzeuges, eine elektronische Wegfahrsperre oder dgl. handeln. Zusätzlich läßt sich das Zündstartschloßsystem zum Zu- bzw. Abschalten weiterer Funktionen verwenden, zum Beispiel für die Inbetriebnahme eines Radios, einer Infotainmenteinrichtung oder der Innenraumbeleuchtung. Der Drehschalter 2 des Zündstartschlosses 1 besitzt eine Aufnahme 3, in die der Identifikationsgeber 4 zur Inbetriebnahme des Betriebsaggregates 5 einführbar ist, sowie eine Handhabe. Bei einem Identifikationsgeber mit eigener Energieversorgung, der im Normalfall über Fernabfrage abfragbar ist (keyless-entry), kann die Aufnahme 3 wahlweise bzw. im Notfall bei entladener Geberbatterie genutzt werden.

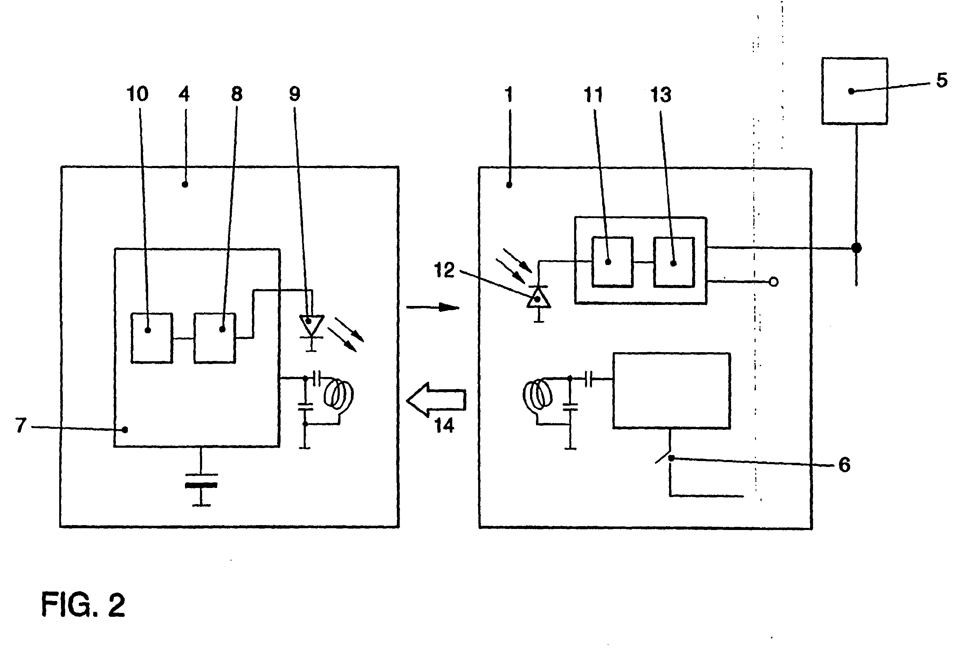

Ist der Identifikationsgeber 4 in die Aufnahme 3 eingeführt, so wird ein Schalter 6 betätigt (Fig. 2). Dadurch wird eine induktive Energieübertragung 14 vom Zündstartschloß 1 auf den Identifikationsgeber 4 initiert, so daß die für den Betrieb der Schlüsselelektronik 7 benötigte Energie vom Zündstartschloß 3 geliefert wird. Anstelle der induktiven Energieübertragung ist durch eine optische Energieübertragung möglich, indem das Zündstartschloß 1 ein optisches Element das Licht emittiert, aufweist und im Identifikationsgeber 4 ein dazu korespondierendes opto-elektronisches Wandlerelement, zum Beispiel eine Photodiode oder einen Phototransistor, angeordnet ist.

Die Identifikationsgeberelektronik 7 enthält einen Betriebssignalsender 8, der als optischer Sender, beispielsweise mit einer Infrarot-Sendediode 9 arbeitend, ausgebildet sein kann. Weiterhin weist die Identifikationsgeberelektronik 7 einen Betriebssignalcodierer 10 auf. Das Zündstartschloß 1 besitzt einen ersten, als optischen Empfänger ausgebildeten Betriebssignalempfänger 11, beispielsweise einen Infrarotempfänger mit zugehöriger Infrarot-Empfangsdiode 12 und einen mit dem Betriebssignalempfänger 11. verbundenen Betriebssignaldecodierer 13. Dadurch ist im Betriebssignalcodierer 10 ein Codesignal erzeugbar und vom Betriebssignalsender 8 des Identifikationsgebers auf den Betriebssignalempfänger 11 im Zündstartschloß 1 übertragbar. Im Betriebssignaldecodierer 13 wird das Codesignal entschlüsselt und ausgewertet, wobei nach positiver Auswertung die Inbetriebnahme des Betriebsaggregates 5 durch das Zündstartschloß 1 durch Betätigung des Drehschalters 2 ermöglicht wird.

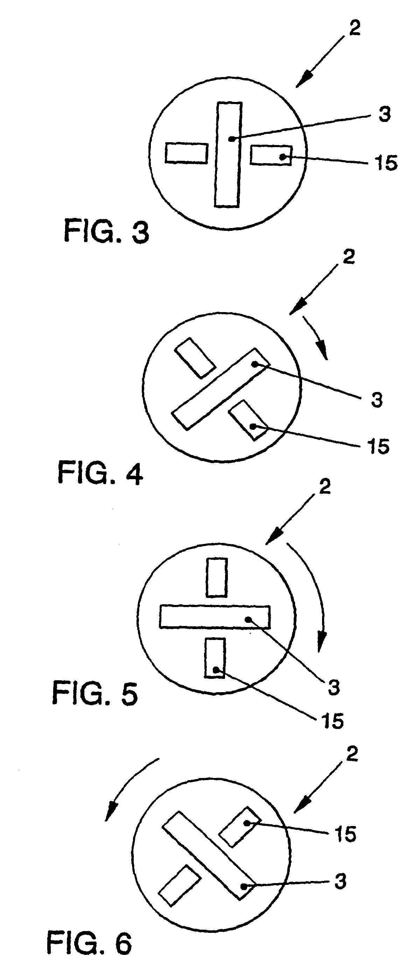

Der in Fig. 3 dargestellte Drehschalter 2 kann mit seiner Handhabe 15 bidirektional um seine in Fig. 3 dargestellte Nullage gedreht werden und ist mit einer automatischen Rückstelleinrichtung ausgebildet, die den mittels eines Drehmoments M aus der Nullage bewegten Drehschalter nach Aufhebung des Momentes M wieder in die Nullage zurückbefördert. Durch die Bewegung des Drehschalter 2 aus der Nullage werden elektrische Signale erzeugt, die je nach Drehrichtung elektrische Komponenten zu- oder abschalten. Im dargestellten Ausführungsbeispiel bewirkt dabei eine Drehung nach rechts eine Zuschaltung und eine Drehung nach links eine Abschaltung von Funktionen. Jeder der beiden Drehrichtungen ist ein Anschlag zugeordnet, bis zu dem der Drehschalter 2 maximal bewegbar ist, wobei der Anschlag für die Abschaltung bei 60° und für die Zuschaltung bei 90° liegt, wobei die Winkelangaben sich jeweils relativ zur Nullage beziehen. Desweiteren ist der Drehrichtung für die Zuschaltung ein Druckpunkt bei 60° zugeordnet, der nur durch Drehmomente M größer ein Grenzdrehmoment M_{gr} überwunden werden kann und ansonsten wie ein Anschlag wirkt. Dem Anschlag für die Drehrichtung der Abschaltung ist eine Einrichtung zur Erfassung der Betätigungsdauer zugeordnet.

Nachdem der Kraftfahrzeugführer in das Kraftfahrzeug eingestiegen ist und über das Zündstartschloßsystem seine Berechtigung über die Einführung des Indentifikationsgebers in die Aufnahme 3 überprüft wurde, kann der Kraftfahrzeugführer durch eine Drehung des Drehschalters 2 nach rechts mittels eines Drehmomentes M bis zum Druckpunkt das Radio und/oder das Innenlicht und/oder ein Informationsdisplay einschalten, wobei die Stellung des Drehschalters 2 am Druckpunkt in Fig. 4 dargestellt ist. Übt nun der Kraftfahrzeugführer kein Drehmoment M mehr auf den Drehschalter 2 aus, so wird der Drehschalter 2 durch die automatische Rückstelleinrichtung wieder in die Nullage gemäß Fig. 3 zurückgesetzt. Durch erneutes Drehen nach rechts bis zum Druckpunkt wird dann die Zündung aktiviert und der Drehschalter 2 anschließend wieder automatisch in die Nullage zurückgesetzt.

Durch Drehen in eine Stellung von 90° wird der Startvorgang initiert und die Antriebsmaschine des Kraftfahrzeuges eingeschaltet.

Möchte der Kraftfahrzeugführer hingegen mit nur einer Betätigung des Drehschalters 2 den Startvorgang der Antriebsmaschine einleiten, so muß dieser ein Drehmoment M größer einem Grenzdrehmoment M_{gr} zur Überwindung des Druckpunktes aufbringen und den Drehschalter 2 bis zu einem Anschlag bewegen, was in Fig. 5 dargestellt ist. Anschließend wird der Drehschalter 2 wieder automatisch in die Nullage zurückgesetzt.

Möchte nun der Kraftfahrzeugführer den Motor wieder abschalten, so wird der Drehknopf 2 nach links bis zum Anschlag gedreht, was in Fig. 6 dargestellt ist. Anschließend wird der Drehschalter 2 wieder automatisch in die Nullage gemäß Fig. 3 zurückgesetzt. Möchte nun der Kraftfahrzeugführer auch das Radio ausschalten, so wiederholt dieser die Drehung des Drehknopfes 2 nach links. Eine andere Möglichkeit, das Radio auszuschalten, besteht darin, den Schlüssel oder die Chipkarte abzuziehen bzw. mit dem Transponder das Kraftfahrzeug zu verlassen, ohne den Drehschalter 2 zu betätigen. Da dieser jedoch in der definierten Nullage verbleibt, stellt dies beim späteren Wiederzuschalten der Funktionen wie Radio oder Zündung kein Problem dar.

Eine andere Möglichkeit, Zündung, Radio und alle anderen Fahrzeugsysteme gleichzeitig abzuschalten, besteht darin, den Drehschalter 2 zum Anschlag gemäß Fig. 6 zu drehen und einige Zeit in dieser Stellung zu halten. Dies wird dann von der Einrichtung zur Erfassung der Betätigungszeit erfaßt, die dann die entsprechenden Abschaltsignale erzeugt.

### BEZUGSZEICHENLISTE

- 1: Zündstartschloß
- 2: Drehschalter
- 3: Aufnahme
- 4: Identifikationsgeber
- 5: Betriebsaggregat
- 6: Schalter
- 7: Schlüsselelektronik
- 8: Betriebssignalsender
- 9: Infrarot-Sendediode
- 10: Betriebssignalcodierer
- 11: Betriebssignalempfänger
- 12: Infrarot-Empfangsdiode
- 13: Betriebssignalempfänger
- 14: induktive Energieübertragung
- 15: Handhabe

## Patentansprüche

1. Elektronisches Zündstartschloßsystem für ein Kraftfahrzeug, umfassend mindestens einen Identifikationsgeber, eine Identifikationserkennungseinrichtung und einen Drehschalter, welcher als bidirektionaler Drehschalter (2) mit einer automatischen Rückstelleinrichtung ausgebildet ist,
**dadurch gekennzeichnet, daß**
mindestens in einer Drehrichtung des Drehschalters einem Anschlag eine Einrichtung zur Erfassung der den Länge der Betätigungszeit des Drehschalters zugeordnet ist.

2. Elektronisches Zündstartschloßsystem nach Anspruch 1,
**dadurch gekennzeichnet, daß**
mindestens einer der Drehrichtungen des bidirektionalen Drehschalters (2) ein Druckpunkt zugeordnet ist, so daß der Drehschalter (2) bei Überschreitung eines Grenzdrehmomentes M_{gr} über den Druckpunkt hinaus bewegbar ist.

3. Elektronisches Zündstartschloßsystem nach Anspruch 1 oder 2,
**dadurch gekennzeichnet, daß**
die Rückstelleinrichtung als Rückstellfedersystem ausgebildet ist.

4. Elektronisches Zündstartschloßsystem nach einem der Ansprüche 1 bis 3,
**dadurch gekennzeichnet, daß**
der Drehschalter (2) eine Aufnahme (3) für den Identifikationsgeber (4) aufweist, in der der Identifikationsgeber (4) mit elektrischer Energie versorgt wird und die Datenkommunikation mit der Identifikationserkennungseinrichtung (11,13) erfolgt.

5. Elektronisches Zündstartschloßsystem nach Anspruch 4,
**dadurch gekennzeichnet, daß**
der Identifikationsgeber (4) in der Aufnahme (3) induktiv oder optisch mit elektrischer Energie versorgt wird.

6. Elektronisches Zündstartschloßsystem nach Anspruch 4 oder 5,
**dadurch gekennzeichnet, daß**
die Datenkommunikation zwischen dem Identifikationsgeber (4) und der Identifikationserkennungseinrichtung (11,13) induktiv oder optisch erfolgt.

7. Elektronisches Zündstartschloßsystem nach einem der Ansprüche 4 oder 5,
**dadurch gekennzeichnet, daß**
die Aufnahme (3) eine Abzugssperre für den Identifikationsgeber (4) aufweist.

8. Elektronisches Zündstartschloßsystem nach Anspruch 7,
**dadurch gekennzeichnet, daß**
die Abzugssperre zumindest bei eingeschalteter Zündeinrichtung des Kraftfahrzeuges aktiv ist.

9. Elektronisches Zündstartschloßsystem nach Anspruch 7 oder 8,
**dadurch gekennzeichnet ,daß**,
die Abzugssperre zumindest bei einer Fahrzeuggeschwindigkeit ungleich Null aktiv ist.

10. Elektronisches Zündstartschloßsystem nach einem der Ansprüche 7 bis 9,
**dadurch gekennzeichnet daß**,
die Abzugssperre zumindest in Abhängigkeit der Stellung des Fahrzeuggetriebes aktiv ist.

11. Elektronisches Zündstartschloßsystem nach einem der Ansprüche 7 bis 10,
**dadurch gekennzeichnet, daß**
die Abzugssperre zumindest in Abhängigkeit eines Signals für die Betätigung der Handbremse aktiv ist.

12. Elektronisches Zündstartschloßsystem nach einem der Ansprüche 1 bis 11,
**dadurch gekennzeichnet, daß**
ein vom Drehschalter (2) initiiertes Zündsignal kumulativ mit einem die Betätigung eines Kupplungspedals oder eines Bremspedals bei Automatikgetrieben repräsentierenden Signals verknüpft ist.

13. Elektronisches Zündstartschloßsystem nach einem der Ansprüche 1 bis 12,
**dadurch gekennzeichnet, daß**
über den Drehschalter (2) weitere Bordnetzkomponenten zu- und abschaltbar sind.

## Claims

1. Electronic ignition lock system for a motor vehicle, comprising at least one identification signal transmitter, an identification detection device and a rotary switch which is embodied as a bidirectional rotary switch (2) with an automatic resetting device, **characterized in that** a device for sensing the length of the activation time of the rotary switch is assigned to a stop at least in one direction of rotation of the rotary switch.

2. Electronic ignition lock system according to Claim 1, **characterized in that** a pressure point is assigned to at least one of the directions of rotation of the bidirectional rotary switch (2) so that the rotary switch (2) can be moved beyond the pressure point when a limiting torque M_{gr} is exceeded.

3. Electronic ignition lock system according to Claim 1 or 2, **characterized in that** the resetting device is embodied as a resetting spring system.

4. Electronic ignition lock system according to one of Claims 1 to 3, **characterized in that** the rotary switch (2) has a receptacle (3) for the identification signal transmitter (4), in which receptacle (3) the identification signal transmitter (4) is supplied with electrical energy and data communication with the identification detection device (11, 13) takes place.

5. Electronic ignition lock system according to Claim 4, **characterized in that** the identification signal transmitter (4) in the receptacle (3) is supplied with electrical energy inductively or optically.

6. Electronic ignition lock system according to Claim 4 or 5, **characterized in that** the data communication between the identification signal transmitter (4) and the identification detection device (11, 13) takes place inductively or optically.

7. Electronic ignition lock system according to one of Claims 4 or 5, **characterized in that** the receptacle (3) has a withdrawal lock for the identification signal transmitter (4).

8. Electronic ignition lock system according to Claim 7, **characterized in that** the withdrawal lock is active at least when the ignition device of the motor vehicle is switched on.

9. Electronic ignition lock system according to Claim 7 or 8, **characterized in that** the withdrawal lock is active at least at a vehicle velocity which is unequal to zero.

10. Electronic ignition lock system according to one of Claims 7 to 9, **characterized in that** the withdrawal lock is active at least as a function of the position of the vehicle transmission.

11. Electronic ignition lock system according to one of Claims 7 to 10, **characterized in that** the withdrawal lock is active at least as a function of a signal for activating the handbrake.

12. Electronic ignition lock system according to one of Claims 1 to 11, **characterized in that** an ignition signal which is initiated by the rotary switch (2) is logically combined cumulatively with a signal which represents the activation of a clutch pedal or of a brake pedal in automatic transmissions.

13. Electronic ignition lock system according to one of Claims 1 to 12, **characterized in that** further on-board electrical system components of the vehicle can be connected into and disconnected from the circuit by means of the rotary switch (2).

## Revendications

1. Système de serrure d'allumage électronique pour un véhicule automobile, comprenant au moins un générateur d'identification, un dispositif de reconnaissance d'identification et un interrupteur rotatif, qui est réalisé sous la forme d'un interrupteur rotatif bidirectionnel (2) avec un dispositif de rappel automatique,
**caractérisé en ce**
**qu'**au moins dans un sens de rotation de l'interrupteur rotatif, un dispositif de détection de la longueur du temps d'actionnement de l'interrupteur rotatif est associé à une butée.

2. Système de serrure d'allumage électronique selon là revendication 1,
**caractérisé en ce**
**qu'**un point de pression est associé à au moins l'un des sens de rotation de l'interrupteur rotatif bidirectionnel (2), de sorte que l'interrupteur rotatif (2) puisse être déplacé au-delà du point de pression en cas de dépassement d'un couple limite M_{gr}.

3. Système de serrure d'allumage électronique selon la revendication 1 ou 2,
**caractérisé en ce que**
le dispositif de rappel est réalisé sous la forme d'un système de ressort de rappel.

4. Système de serrure d'allumage électronique selon l'une quelconque des revendications 1 à 3,
**caractérisé en ce que**
l'interrupteur rotatif (2) présente un logement (3) pour le générateur d'identification (4), dans lequel le générateur d'identification (4) est alimenté en énergie électrique et dans lequel a lieu la communication des données avec le dispositif de reconnaissance d'identification (11, 13).

5. Système de serrure d'allumage électronique selon la revendication 4,
**caractérisé en ce que**
le générateur d'identification (4) est alimenté en énergie électrique par voie inductive ou optique dans le logement (3).

6. Système de serrure d'allumage électronique selon la revendication 4 ou 5,
**caractérisé en ce que**
la communication des données s'effectue par voie inductive ou optique entre le générateur d'identification (4) et le dispositif de reconnaissance d'identification (11, 13).

7. Système de serrure d'allumage électronique selon l'une quelconque des revendications 4 ou 5,
**caractérisé en ce que**
le logement (3) présente un arrêt de détente pour le générateur d'identification (4).

8. Système de serrure d'allumage électronique selon la revendication 7,
**caractérisé en ce que**
l'arrêt de détente est actif au moins lorsque le dispositif d'allumage du véhicule automobile est enclenché.

9. Système de serrure d'allumage électronique selon la revendication 7 ou 8,
**caractérisé en ce que**
l'arrêt de détente est activé au moins lorsqu'une vitesse du véhicule n'est pas nulle.

10. Système de serrure d'allumage électronique selon l'une quelconque des revendications 7 à 9,
**caractérisé en ce que**
l'arrêt de détente est actif au moin's en fonction de la position de la boîte de vitesses du véhicule.

11. Système de serrure d'allumage électronique selon l'une quelconque des revendications 7 à 10,
**caractérisé en ce que**
l'arrêt de détente est actif au moins en fonction d'un signal pour l'actionnement du frein à main.

12. Système de serrure d'allumage électronique selon l'une quelconque des revendications 1 à 11,
**caractérisé en ce**
**qu'**un signal d'allumage amorcé par l'interrupteur rotatif (2) est relié de manière cumulative avec un signal représentant l'actionnement d'une pédale d'embrayage ou d'une pédale de frein dans des boîtes de vitesses automatiques.

13. Système de serrure d'allumage électronique selon l'une quelconque des revendications 1 à 12,
**caractérisé en ce que**
d'autres composants du réseau de bord peuvent être connectés et déconnectés par le biais de l'interrupteur rotatif (2).
